# EUROPÄISCHE PATENTSCHRIFT

(11) **EP 3 652 047 B1**
(45) Veröffentlichungstag und Bekanntmachung des Hinweises auf die Patenterteilung: **13.03.2024**
(21) Anmeldenummer: 18735339.6
(22) Anmeldetag: 09.07.2018
(51) Int. Cl.: B62D 27/02, C08G 59/18, C08K 7/22, C08K 7/28, C09J 163/00, C08G 18/80, C08G 59/40, C09J 5/06, C09J 11/04, C09J 175/04, C08K 3/36, C08L 63/00

(54) **EINKOMPONENTIGER HITZEHÄRTENDER EPOXIDKLEBSTOFF MIT HOHER AUSWASCHBESTÄNDIGKEIT**
SINGLE-COMPONENT THERMOSETTING EPOXY ADHESIVE WITH HIGH WASHING RESISTANCE
ADHÉSIF ÉPOXY À UN COMPOSANT THERMODURCISSABLE PRÉSENTANT UNE RÉSISTANCE ÉLEVÉE AU DÉLAVAGE PAR EAU

(30) Priorität: 13.07.2017 EP 17181275
(43) Veröffentlichungstag der Anmeldung: 20.05.2020
(73) Patentinhaber: Sika Technology AG, 6340 Baar (CH)
(72) Erfinder: VOCI, Antonio, 8050 Zürich (CH)
(74) Vertreter: Sika Patent Attorneys
(86) Internationale Anmeldenummer: PCT/EP2018/068527
(87) Internationale Veröffentlichungsnummer: WO 2019/011849

(56) Entgegenhaltungen:
- EP-A1- 2 134 799
- EP-A2- 1 174 481
- WO-A1-2016/108958
- GB-A- 1 124 251

## Beschreibung

### Technisches Gebiet

Die Erfindung betrifft das Gebiet der hitzehärtenden Epoxidklebstoffe.

### Stand der Technik

Einkomponentige hitzehärtende Epoxidharzklebstoffe werden schon seit langem im als Klebstoffe für den Rohbau von Transportmittel eingesetzt. Nach der Applikation dieser Klebstoffe und dem Fügen werden die gefügten Teile lackiert. Um den Lackierungsprozess zu optimieren, werden diese Teile vor dem Lackieren mittels Waschflüssigkeit gereinigt. Um diesen Reinigungsprozess zu überstehen und im darauf folgenden KTL-Prozess (KTL ₌ Kathodische Lauchlackierung) nicht zu Verunreinigungen und Kontaminationen zu führen, muss der verwendete Klebstoff möglichst "auswaschbeständig" sein.

Die bisherigen derartigen Klebstoffe sind bei der Applikation bei Raumtemperatur sehr hochviskos und werden deshalb vorwiegend bei höheren Temperaturen appliziert. Dies ist jedoch ein grosser Nachteil besonders dann, wenn die Applikation als Spritzapplikation erfolgen soll.

WO 2016/108958 A1 offenbart einen einkomponentigen hitzehärtenden Epoxidharzklebstoff für Spritzapplikationen, der eine verbesserte Abwaschbeständigkeit aufweist, um Verunreinigungen zu vermeiden, die sich negativ auf den Elektrotauchlackierprozess bei der Herstellung der Autokarosserie auswirken würden, und der für die Montage von metallischen Strukturbauteilen in der Automobilindustrie verwendet werden kann. Gemäss dem Dokument wird die Abwaschbeständigkeit verbessert, wenn die Epoxidklebstoffzusammensetzung ein epoxidfunktionalisiertes amphipathisches Blockcopolymer und vorzugsweise Glashohlkugeln, entweder einzeln oder in Kombination mit anderen Füllstoffkomponenten, enthält.

### Darstellung der Erfindung

Aufgabe der vorliegenden Erfindung ist es daher, hitzehärtende Epoxidharzzusammensetzungen zur Verfügung zu stellen, welche im Temperaturbereich von 40 °C bis 70 °C, insbesondere 30 °C bis 70 °C, gut applizierbar sind und auch bei höheren Temperaturen, d.h. zwischen 20 und 100°C, insbesondere zwischen 40 und 70°C, bevorzugt zwischen 50 und 70°C, auswaschbeständig sind.

Überraschenderweise wurde gefunden, dass eine einkomponentige hitzehärtende Epoxidharzzusammensetzung gemäss Anspruch 1 diese Aufgabe zu lösen vermag.

Weiter wurde überraschenderweise gefunden, dass solche erfindungsgemässen Epoxidharzzusammensetzungen, welche zusätzlich Schlagzähigkeitsmodifikatoren enthalten, eine hohe Schlagschälfestigkeit bei Raumtemperatur sowie tiefen Temperaturen aufweisen.

Weitere Aspekte der Erfindung sind Gegenstand weiterer unabhängiger Ansprüche und weitere bevorzugte Ausführungsformen der Erfindung sind Gegenstand der Unteransprüche.

### Wege zur Ausführung der Erfindung

Die vorliegende Erfindung betrifft somit einen einkomponentigen hitzehärtenden Epoxidharzklebstoff, umfassend
- 10 - 60 Gew.-%, insbesondere 30 - 50 Gew.-%, bezogen auf das Gesamtgewicht der Epoxidharzzusammensetzung, Epoxidharz mit durchschnittlich mehr als einer Epoxidgruppe pro Molekül;
- 1-10 Gew.-%, insbesondere 2 - 6 Gew.-%, bezogen auf das Gesamtgewicht der Epoxidharzzusammensetzung, mindestens eines latenten Härters für Epoxidharze;
- 2-7 Gew.-%, insbesondere 2-6.5 Gew.-%, 2-5 Gew.-%, 2-4 Gew.-%, Aerogelpartikel, bezogen auf das Gesamtgewicht des einkomponentigen hitzehärtenden Epoxidharzklebstoffs;
- mindestens einen Zähigkeitsverbesserer D, ausgewählt aus der Gruppe bestehend aus endständig blockierten Polyurethanpolymeren D1, Flüssigkautschuken D2 und Core-Shell-Polymeren D3, vorzugsweise beträgt dabei der Anteil an:
   Zähigkeitsverbesserer D1 10-60 Gew.-%, insbesondere 20-40 Gew.-%;
   Zähigkeitsverbesserer D2 10-30 Gew.-%, insbesondere 20-30 Gew.-%;
   Zähigkeitsverbesserer D3 10-30 Gew.-%, insbesondere 20-30 Gew.-%;
   bezogen auf das Gesamtgewicht der Epoxidharzzusammensetzung;
- vorzugsweise 5-40 Gewichts-%, vorzugsweise 5-20 Gewichts-%, bezogen auf das Gesamtgewicht der Epoxidharzzusammensetzung, von einem Füllstoffe F ausgewählt aus der Gruppe bestehend aus Calciumcarbonat und Calciumoxid;
- vorzugsweise 0.1 - 15 Gewichts-%, vorzugsweise 0.1-5 Gewichts-%,insbesondere bevorzugt 0.1-2 Gewichts-%, besonders bevorzugt 0.2 - 1 Gewichts-%, bezogen auf das Gesamtgewicht der Epoxidharzzusammensetzung, von einem Epoxidgruppen-tragenden Reaktivverdünner G,
   wobei der einkomponentige hitzehärtende Epoxidharzklebstoff zu mehr als 95 Gewichts-%, bezogen auf das Gesamtgewicht der Epoxidharzzusammensetzung, aus den vorgenannten Bestandteilen besteht,
   und wobei der Epoxidharzklebstoff eine Viskosität von 1000 - 4000 Pas, insbesondere 1000 - 3500 Pas, bei 25°C aufweist, wobei die Viskosität oszillographisch bestimmt wird mittels eines Rheometers mit beheizbarer Platte, wobei das Rheometer ist das MCR 301 von Anton Paar, und die Rheometerbedingungen umfassen einen Spalt von 1000 µm, ein Mess-Plattendurchmesser von 25 mm, Platte/Platte, Deformation 0,01 bei 5 Hz und eine Temperatur von 25° C.

Der Epoxidharzklebstoff ist einkomponentig, d.h. die Bestandteile des Epoxidharzklebstoffs, insbesondere das Epoxidharz und der Härter, sind in einer Komponente enthalten, ohne dass bei üblicher Umgebungstemperatur bzw. Raumtemperatur eine Härtung stattfindet. Daher ist der einkomponentige Epoxidharzklebstoff lagerstabil. Er ist daher in dieser Form handelbar, während bei zweikomponentigen Systemen die Mischung der Komponenten erst unmittelbar vor der Anwendung möglich ist.

Die Härtung des einkomponentigen Epoxidharzklebstoffs erfolgt durch Erhitzen, typischerweise bei einer Temperatur von über 70°C, z.B. im Bereich von 100 bis 220 °C. Insofern handelt es sich um einen einkomponentigen hitzehärtenden Epoxidharzklebstoff.

Die Vorsilbe Poly in Ausdrücken wie Polyol oder Polyisocyanat bedeutet, dass die Verbindung zwei oder mehr der genannten Gruppen aufweist. Ein Polyisocyanat ist z.B. eine Verbindung mit zwei oder mehr Isocyanatgruppen.

Der Ausdruck "unabhängig voneinander" wie nachstehend verwendet bedeutet, dass in demselben Molekül mehrere gleich bezeichneten Substituenten gleiche oder unterschiedliche Bedeutung gemäß der Definition aufweisen können.

Die gestrichelten Linien in den Formeln dieses Dokumentes stellen jeweils die Bindung zwischen dem jeweiligen Substituenten und dem dazugehörigen Molekülrest dar.

Unter Raumtemperatur wird hier eine Temperatur von 23°C verstanden, sofern nicht anders angegeben.

Der hitzehärtende einkomponentige Epoxidharzklebstoff enthält mindestens ein Epoxidharz mit durchschnittlich mehr als einer Epoxidgruppe pro Molekül. Die Epoxidgruppe liegt vorzugsweise als Glycidylethergruppe vor. Das Epoxidharz mit durchschnittlich mehr als einer Epoxidgruppe pro Molekül ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.

Bevorzugte Epoxid-Festharze weisen die Formel (X) auf

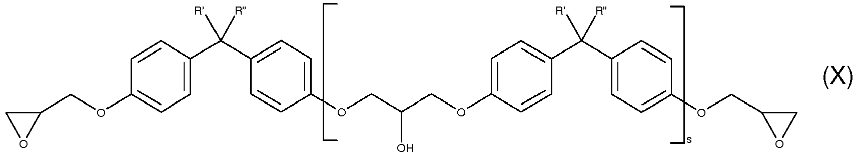

Hierbei stehen die Substituenten R' und R" unabhängig voneinander entweder für H oder CH₃.

Weiterhin steht der Index s für einen Wert von > 1,5, insbesondere von 1,5 bis 12, bevorzugt 2 bis 12.

Derartige Epoxid-Festharze sind kommerziell erhältlich beispielsweise von Dow oder Huntsman oder Momentive.

Verbindungen der Formel (X) mit einem Index s im Bereich von größer 1 bis 1,5 werden vom Fachmann als Semisolid-Epoxidharze bezeichnet. Für die hier vorliegende Erfindung werden sie ebenfalls als Festharze betrachtet. Bevorzugt sind jedoch Epoxid-Festharze im engeren Sinn, d.h. Epoxid-Festharze der Formel (X) mit einem Index s, der einen Wert von > 1,5 aufweist.

Bevorzugte Epoxid-Flüssigharze weisen die Formel (XI) auf.

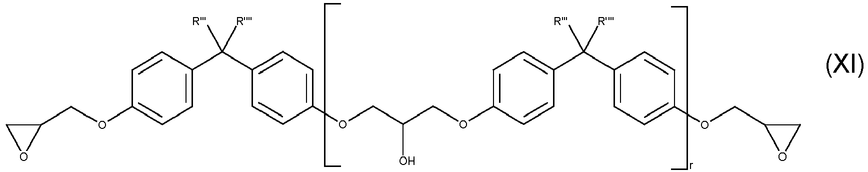

Hierbei stehen die Substituenten R‴ und Rʺʺ unabhängig voneinander entweder für H oder CH₃. Weiterhin steht der Index r für einen Wert von 0 bis 1. Bevorzugt steht r für einen Wert von 0 bis kleiner als 0,2.

Es handelt sich somit vorzugsweise um Diglycidylether von Bisphenol-A (DGEBA), von Bisphenol-F sowie von Bisphenol-AIF (Die Bezeichnung ,A/F' verweist hierbei auf eine Mischung von Aceton mit Formaldehyd, welche als Edukt bei dessen Herstellung verwendet wird). Solche Flüssigharze sind beispielsweise als Araldite^{®} GY 250, Araldite^{®} PY 304, Araldite^{®} GY 282 (Huntsman) oder D.E.R.^{™} 331 oder D.E.R.^{™} 330 (Dow) oder Epikote 828 (Momentive) erhältlich.

Bevorzugt stellt das Epoxidharz ein Epoxid-Flüssigharz der Formel (XI) dar. In einer noch mehr bevorzugten Ausführungsform enthält der hitzehärtende Epoxidharzklebstoff sowohl mindestens ein Epoxid-Flüssigharz der Formel (XI) als auch mindestens ein Epoxid-Festharz der Formel (X).

Der Anteil des Epoxidharzes mit durchschnittlich mehr als einer Epoxidgruppe pro Molekül beträgt vorzugsweise 15 bis 60 Gew.-%, bezogen auf das Gesamtgewicht des Epoxidharzklebstoffs.

Der hitzehärtende einkomponentige Epoxidharzklebstoff enthält ferner mindestens einen latenten Härter für Epoxidharze. Latente Härter sind bei Raumtemperatur im Wesentlichen inert und werden durch erhöhte Temperatur, typischerweise bei Temperaturen von 70°C oder mehr, aktiviert, wodurch die Härtungsreaktion gestartet wird. Es können die üblichen latenten Härter für Epoxidharze eingesetzt werden. Es handelt sich bevorzugt um einen latenten Stickstoff enthaltenden Härter für Epoxidharze.

Beispiele für geeignete latente Härter sind Dicyandiamid, Guanamine, Guanidine, Aminoguanidine und deren Derivate; substituierte Harnstoffe, insbesondere 3-(3-Chlor-4-methylphenyl)-1,1-dimethylharnstoff (Chlortoluron), oder Phenyl-dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron), sowie Imidazole und Amin-Komplexe.

Vorzugsweise ist der latente Härter ausgewählt ist aus der Liste bestehend aus Dicyandiamid, Guanaminen, Guanidinen, Aminoguanidinen und deren Derivaten, substituierten Harnstoffen, Imidazolen und Amin-Komplexen.

Besonders bevorzugt als latenter Härter ist Dicyandiamid.

Der Anteil des latenten Härters beträgt 1-10 Gew.-%, bevorzugter 1 bis 8 Gew.-%, bezogen auf das Gesamtgewicht des Epoxidharzklebstoffs.

Der hitzehärtende Epoxidharzklebstoff enthält ferner 2-7 Gew.-%, insbesondere 2-6.5 Gew.-%, 2-5 Gew.-%, bevorzugt 2-4 Gew.-%, Aerogelpartikel, bezogen auf das Gesamtgewicht des einkomponentigen hitzehärtenden Epoxidharzklebstoffs.

Beträgt der Anteil 2-5 Gew.-%, bevorzugt 2-4 Gew.-%, insbesondere 3-4 Gew.-% Aerogelpartikel, bezogen auf das Gesamtgewicht des einkomponentigen hitzehärtenden Epoxidharzklebstoffs, ist dies hohen Werten der Schlagschälfestigkeit, insbesondere im Bereich von 23°C bis - 30°C, zuträglich.

Unter dem Begriff "Aerogel" wird im vorliegenden Dokument vorzugsweise ein hochporöses Material aus Siliciumoxiden oder Metalloxiden mit geringer Dichte, das durch Bilden eines Gels und anschliessendes Entfernen von Flüssigkeit aus dem Gel hergestellt wird, während die Gelstruktur im Wesentlichen zurückgehalten wird, verstanden.

Bevorzugte erfindungsgemässe Aerogelpartikel haben eine BET-Oberfläche von mehr als 200 m²/g, mehr als 300 m²/g, mehr als 400 m²/g. Besonders bevorzugt sind Aerogelpartikel mit einer Oberfläche von 500 - 1000 m²/g, insbesondere 600 - 800 m²/g. Vorzugsweise wird unter dem Begriff "BET-Oberfläche" "eine BET-Oberfläche, die nach DIN ISO 9277 gemessen wird.

Vorzugsweise beträgt die Partikeldichte der Aerogelpartikel 90-200 kg/m³, insbesondere von 110-190 kg/m³. Vorzugsweise wird unter dem Begriff "Partikeldichte" eine Schüttdichte verstanden, die nach DIN ISO 697 gemessen wird.

Weiterhin bevorzugt sind Aerogelpartikel mit Porengrössen von weniger als 180 nm, insbesondere weniger als 150 nm, weniger als 100 nm, besonders bevorzugt weniger als 50 nm.

Bevorzugt sind Aerogelpartikel basierend auf Siliciumdioxid (SiO₂). Es können jedoch auch Aerogelpartikel basierend auf Metalloxiden verwendet werden, wie beispielsweise Aluminiumoxid (Al₂O₃).

Besonders bevorzugt sind Aerogelpartikel basierend auf synthetischem amorphem Kieselgel, das gegebenenfalls oberflächenmodifiziert sein kann.

Es werden vorzugsweise amorphe Siliciumdioxid-Aerogelpartikel verwendet, die mit Trimethylsilylgruppen oberflächenmodifiziert sind. Solche amorphe Siliciumdioxid-basierte Aerogelpartikel unterscheiden sich von anderen Siliciumdioxidmaterialien wie kristallinem Siliciumdioxid oder anderen amorphen Siliciumdioxidformen wie pyrogenem (fumed) Siliciumdioxid.

Bevorzugt sind Aerogelpartikel mit einer mittleren Partikelgrösse von 0.01 - 5 mm, vorzugsweise 0.1 - 4 mm, insbesondere bevorzugt 1 - 4 mm.

Der Begriff "mittlere Partikelgrösse" bezieht sich hier vorzugsweise auf den D50-Wert der kumulativen Volumenverteilungskurve, bei der 50 Vol.-% der Partikel einen Durchmesser aufweisen, der kleiner als der Wert ist. Die mittlere Partikelgrösse oder der D50-Wert wird vorzugsweise durch Laserdiffraktometrie bestimmt.

Der Fachmann weiß, wie man Aerogelpartikel herstellt. Spezifische Verfahren zur Herstellung von Aerogelpartikeln sind z. B. in WO 2008/115812 A2 (Cabot) oder EP 0699104 B1 (Hoechst) erläutert. Aerogelpartikel sind im Handel aus verschiedenen Quellen erhältlich. Geeignete Aerogelpartikel sind beispielsweise solche, die von Cabot Corp. (Billerica, MA, USA) unter den Handelsnamen Airogel Partikel P100, 200 und 300 erhältlich sind.

Der hitzehärtende Epoxidharzklebstoff enthält mindestens einen Zähigkeitsverbesserer **D.** Die Zähigkeitsverbesserer **D** können fest oder flüssig sein.

Der Zähigkeitsverbesserer **D** ist ausgewählt aus der Gruppe bestehend aus endständig blockierten Polyurethanpolymeren **D1**, Flüssigkautschuken **D2** und Core-Shell-Polymeren **D3.**

Bevorzugt ist der Zähigkeitsverbesserer **D** ein endständig blockiertes Polyurethanpolymer **D1**, vorzugsweise handelt es sich um ein endständig blockiertes Polyurethanprepolymer der Formel (I).

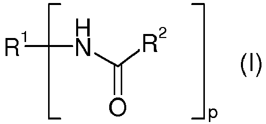

Hierbei steht R¹ für einen p-wertigen Rest eines mit Isocyanatgruppen terminierten linearen oder verzweigten Polyurethanprepolymers nach dem Entfernen der endständigen Isocyanatgruppen und p für einen Wert von 2 bis 8.

Weiterhin stehen R² unabhängig voneinander für einen Substituenten, welcher ausgewählt ist aus der Gruppe bestehend aus

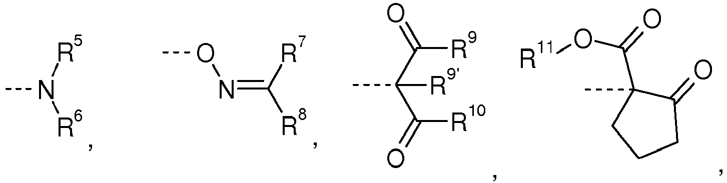

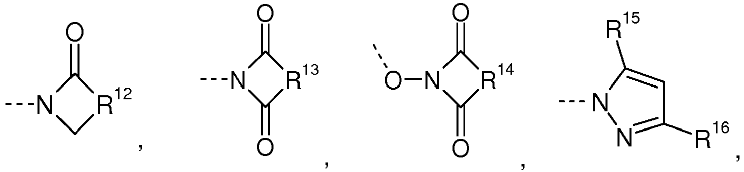

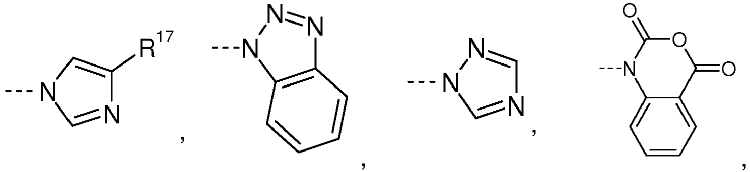

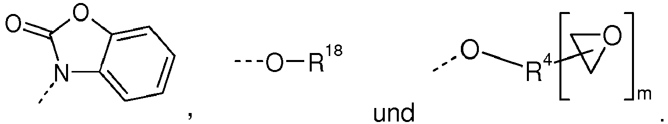

Hierbei steht R⁵, R⁶, R⁷ und R⁸ je unabhängig voneinander für eine Alkyl- oder Cycloalkyl- oder Aralkyl- oder Arylalkyl-Gruppe, oder R⁵ bildet zusammen mit R⁶, oder R⁷ zusammen mit R⁸, einen Teil eines 4- bis 7-gliedrigen Rings bilden, welcher gegebenenfalls substituiert ist.

Weiterhin stehen R^{9'} und R¹⁰ je unabhängig voneinander für eine Alkyl- oder Aralkyl- oder Arylalkyl-Gruppe oder für eine Alkyloxy- oder Aryloxy- oder Aralkyloxy-Gruppe und R¹¹ für eine Alkylgruppe.

R¹², R¹³ und R¹⁴ stehen je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe.

R¹⁵, R¹⁶ und R¹⁷ stehen je unabhängig voneinander für H oder für eine Alkylgruppe oder für eine Arylgruppe oder eine Aralkylgruppe und R¹⁸ steht für eine Aralkylgruppe oder für eine ein- oder mehrkernige substituierte oder unsubstituierte Aromatengruppe, welche gegebenenfalls aromatische Hydroxylgruppen aufweist.

Schliesslich steht R⁴ für einen Rest eines eine primäre oder sekundäre Hydroxylgruppe enthaltenden aliphatischen, cycloaliphatischen, aromatischen oder araliphatischen Epoxids nach dem Entfernen der Hydroxy- und Epoxidgruppen und m für einen Wert von 1, 2 oder 3.

Als R¹⁸ sind insbesondere einerseits Phenole oder Polyphenole, insbesondere Bisphenole, nach Entfernung einer Hydroxylgruppe zu betrachten. Bevorzugte Bespiele für derartige Phenole und Bisphenole sind insbesondere Phenol, Kresol, Resorcinol, Brenzkatechin, Cardanol (3-Pentadecenylphenol (aus Cashewnuss-Schaien-Öi)), Nonylphenol, mit Styrol oder Dicyclopentadien umgesetzte Phenole, Bis-Phenol-A, Bis-Phenol-F und 2,2'-Diallyl-bisphenol-A. Als R¹⁸ sind andererseits insbesondere Hydroxybenzylalkohol und Benzylalkohol nach Entfernung einer Hydroxylgruppe zu betrachten.

Falls R⁵, R⁶, R⁷, R⁸, R⁹, R^{9'}, R¹⁰, R¹¹, R¹⁵, R¹⁶ oder R¹⁷ für eine Alkylgruppe steht, ist diese insbesondere eine lineare oder verzweigte C₁-C₂₀-Alkylgruppe.

Falls R⁵, R⁶, R⁷, R⁸, R⁹, R^{9'}, R¹⁰, R¹⁵, R¹⁶, R¹⁷ oder R¹⁸ für eine Aralkylgruppe steht, ist diese Gruppierung insbesondere eine über Methylen gebundene aromatische Gruppe, insbesondere eine Benzylgruppe.

Falls R⁵, R⁶, R⁷, R⁸, R⁹, R^{9'} oder R¹⁰ für eine Alkylarylgruppe steht, ist diese insbesondere eine über Phenylen gebundene C₁- bis C₂₀-Alkylgruppe, wie beispielsweise Tolyl oder Xylyl.

Die Reste R² sind vorzugsweise die Substituenten der Formeln

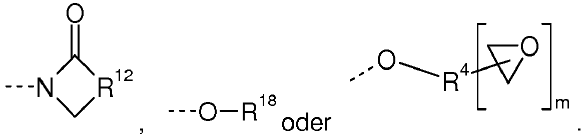

Als Substituent der Formel 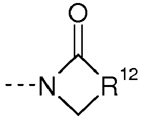 ist ε-Caprolactam nach Entfernung des NH-Protons bevorzugt.

Als Substituent der Formel ---O-R¹⁸ sind Monophenole oder Polyphenole, insbesondere Bisphenole, nach Entfernung eines phenolischen Wasserstoffatoms bevorzugt. Besonders bevorzugte Bespiele für derartigen Reste R² sind Reste, welche ausgewählt sind aus der Gruppe bestehend aus

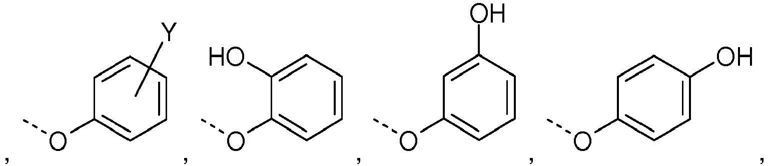

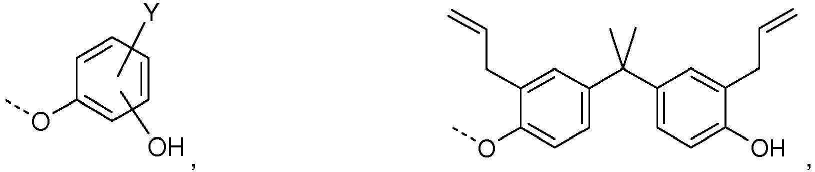

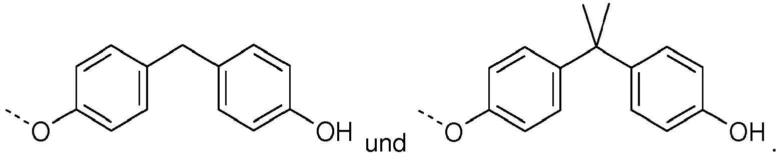

Der Rest Y steht hierbei für einen gesättigten, aromatischen oder olefinisch ungesättigten Kohlenwasserstoffrest mit 1 bis 20 C-Atomen, insbesondere mit 1 bis 15 C-Atomen. Als Y sind insbesondere Allyl, Methyl, Nonyl, Dodecyl, Phenyl, Alkylether, Carbonsäureester oder ein ungesättigter C₁₅-Alkylrest mit 1 bis 3 Doppelbindungen bevorzugt.

Meist bevorzugt steht R² für ---O-R¹⁸.

Die Herstellung des endständig blockierten Polyurethanprepolymers der Formel (I) erfolgt aus dem Isocyanatgruppen terminierten linearen oder verzweigten Polyurethanprepolymer mit einer oder mehreren Isocyanat-reaktiven Verbindungen R²H. Falls mehrere derartige Isocyanat-reaktive Verbindungen eingesetzt werden, kann die Reaktion sequentiell oder mit einer Mischung dieser Verbindungen erfolgen.

Die Umsetzung erfolgt bevorzugt so, dass die eine oder die mehreren Isocyanat-reaktiven Verbindungen R²H stöchiometrisch oder im stöchiometrischen Überschuss eingesetzt werden, um zu gewährleisten, dass alle NCO-Gruppen umgesetzt sind.

Das Polyurethanprepolymer mit Isocyanat-Endgruppengruppen, auf dem R¹ basiert, lässt sich aus mindestens einem Diisocyanat oder Triisocyanat sowie aus einem Polymeren **Q_{PM}** mit endständigen Amino-, Thiol- oder Hydroxylgruppen und/oder aus einem, gegebenenfalls substituierten, Polyphenol **Q_{PP}** herstellen.

Geeignete Diisocyanate sind aliphatische, cycloaliphatische, aromatische oder araliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat (H₁₂MDI), p-Phenylendiisocyanat (PPDI), m-Tetramethylxylylen diisocyanat (TMXDI), etc. sowie deren Dimere. Bevorzugt sind HDI, IPDI, MDI oder TDI.

Geeignete Triisocyanate sind Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate. Selbstverständlich können auch geeignete Mischungen von Di- oder Triisocyanaten eingesetzt werden.

Als Polymere **Q_{PM}** mit endständigen Amino-, Thiol- oder Hydroxylgruppen sind insbesondere geeignet Polymere **Q_{PM}** mit zwei oder drei endständigen Amino-, Thiol- oder Hydroxylgruppen.

Die Polymere **Q_{PM}** weisen vorteilhaft ein Equivalenzgewicht von 300 - 6000, insbesondere von 600 - 4000, bevorzugt von 700 - 2200 g/Equivalent NCO-reaktiver Gruppen auf.

Als Polymere **Q_{PM}** geeignet sind Polyole, z.B. die folgenden handelsüblichen Polyole oder beliebige Mischungen davon:
- Polyoxyalkylenpolyole, auch Polyetherpolyole genannt, welche das Polymerisationsprodukt von Ethylenoxid, 1,2-Propylenoxid, 1,2- oder 2,3-Butylenoxid, Tetrahydrofuran oder Mischungen davon sind, gegebenenfalls polymerisiert mit Hilfe eines Startermoleküls mit zwei oder drei aktiven H-Atomen wie beispielsweise Wasser oder Verbindungen mit zwei oder drei OH-Gruppen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (kurz DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten. Besonders geeignet sind Polyoxypropylendiole und -triole mit einem Ungesättigtheitsgrad tiefer als 0,02 mEq/g und mit einem mittleren Molekulargewicht im Bereich von 1000 - 30'000 Dalton, Polyoxybutylendiole und -triole, Polyoxypropylendiole und -triole mit einem mittleren Molekulargewicht von 400 - 8'000 Dalton, sowie sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.
- Hydroxyterminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte;
- Styrol-Acrylnitril gepfropfte Polyetherpolyole, wie sie beispielsweise von BASF unter dem Namen Lupranol^{®} geliefert werden;
- Polyhydroxyterminierte Acrylnitril/Butadien-Copolymere, wie sie beispielsweise aus carboxylterminierten Acrylnitril/Butadien-Copolymeren (kommerziell erhältlich unter dem Namen Hypox^{®} CTBN von Emerald Perfomance Materials) und Epoxiden oder Aminoalkoholen hergestellt werden können;
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton;
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.

Vorteilhaft sind die Polymere **Q_{PM}** di- oder höherfunktioneller Polyole mit OH-Equivalentgewichten von 300 bis 6000 g/OH-Equivalent, insbesondere von 600 bis 4000 g/OH-Equivalent, vorzugsweise 700 - 2200 g/OH-Equivalent. Weiterhin vorteilhaft sind die Polyole ausgewählt aus der Gruppe bestehend aus Polyethylenglycolen, Polypropylenglycolen, Polyethylenglycol-Polypropylenglycol-Block-Co-polymeren, Polybutylenglycolen, hydroxylterminierten Polybutadienen, hydroxylterminierten Butadien/Acrylnitril-Copolymeren, hydroxylterminierten synthetischen Kautschuken, deren Hydrierungsprodukten und Gemischen dieser genannten Polyole.

Desweiteren können als Polymere **Q_{PM}** auch di- oder höherfunktionelle aminoterminierte Polyethylenether, Polypropylenether, wie sie zum Beispiel unter dem Namen Jeffamine^{®} von Huntsman vertrieben werden, Polybutylenether, Polybutadiene, Butadien/Acrylnitril-Copolymere, wie sie zum Beispiel die unter dem Namen Hypro^{®} ATBN von Emerald Perfomance Materials vertrieben werden, sowie weitere aminoterminierte synthetische Kautschuke oder Gemische der genannte Komponenten verwendet werden.

Für gewisse Anwendungen sind als Polymere **Q_{PM}** insbesondere Hydroxyl-Gruppen aufweisende Polybutadiene oder Polyisoprene oder deren partiell oder vollständig hydrierte Reaktionsprodukte geeignet.

Es ist weiterhin möglich, dass die Polymere **Q_{PM}** auch kettenverlängert sein können, wie es in dem Fachmann bekannter Art und Weise durch die Reaktion von Polyaminen, Polyolen und Polyisocyanaten, insbesondere von Diaminen, Diolen und Diisocyanaten, durchgeführt werden kann.

Am Beispiel eines Diisocyanates und eines Diols bildet sich daraus, wie im Folgenden gezeigt, je nach gewählter Stöchiometrie eine Spezies der Formel (VI) oder (VII)

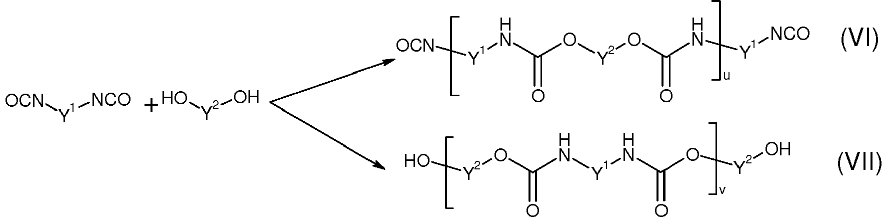

Die Reste Y¹ und Y² stellen einen divalenten organischen Rest dar und die Indizes u und v variieren je nach Stöchiometrieverhältnis von 1 bis typischerweise 5.

Diese Spezies der Formel (VI) oder (VII) können dann wiederum weiterreagiert werden. So kann beispielsweise aus der Spezies der Formel (VI) und einem Diol mit einem divalenten organischen Rest Y³ ein kettenverlängertes Polyurethanprepolymer der folgenden Formel gebildet werden:

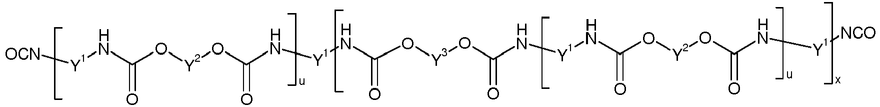

Aus der Spezies der Formel (VII) und einem Diisocyanat mit einem divalenten organischen Rest Y⁴ kann ein kettenverlängertes Polyurethanprepolymer der folgenden Formel gebildet werden:

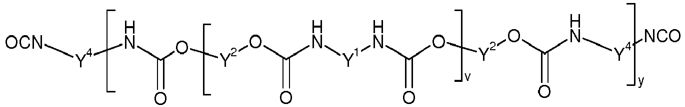

Die Indizes x und y variieren je nach Stöchiometrieverhältnis von 1 bis typischerweise 5, und sind insbesondere 1 oder 2.

Weiterhin kann auch die Spezies der Formel (VI) mit der Spezies der Formel (VII) umgesetzt werden, so dass ein NCO-Gruppen aufweisendes kettenverlängertes Polyurethanprepolymer entsteht.

Für die Kettenverlängerung werden insbesondere Diole und/oder Diamine und Diisocyanate bevorzugt. Selbstverständlich ist dem Fachmann klar, dass auch höherfunktionelle Polyole, wie beispielsweise Trimethylolpropan oder Pentaerythrit, oder höherfunktionelle Polyisocyanate, wie Isocyanurate von Diisocyanaten, für die Kettenverlängerung verwendet werden können.

Bei den Polyurethanprepolymeren generell und bei den kettenverlängerten Polyurethanprepolymeren im Speziellen ist vorteilhaft darauf zu achten, dass die Prepolymere nicht zu hohe Viskositäten aufweisen, insbesondere wenn höher funktionelle Verbindungen für die Kettenverlängerung eingesetzt werden, denn dies kann deren Umsetzung zu den Polyurethanprepolymeren der Formel (I) beziehungsweise die Applikation des Klebstoffs erschweren.

Als Polymere **Q_{PM}** bevorzugt sind Polyole mit mittleren Molekulargewichten zwischen 600 und 6000 Dalton ausgewählt aus der Gruppe bestehend aus Polyethylenglykolen, Polypropylenglykolen, Polyethylenglykol-Polypropylenglykol-Blockpolymeren, Polybutylenglykolen, hydroxylterminierte Polybutadiene, hydroxylterminierte Butadien-Acrylnitril-Copolymere sowie deren Gemische.

Als Polymere **Q_{PM}** sind insbesondere bevorzugt α,ω-Dihydroxypolyalkylenglykole mit C₂-C₆-Alkylengruppen oder mit gemischten C₂-C₆-Alkylengruppen, die mit Amino-, Thiol- oder, bevorzugt, Hydroxylgruppen terminiert sind. Besonders bevorzugt sind Polypropylenglykole oder Polybutylenglykole. Weiterhin besonders bevorzugt sind Hydroxylgruppen-terminierte Polyoxybutylene.

Als Polyphenol **Q_{PP}** sind insbesondere geeignet Bis-, Tris- und Tetraphenole. Hierunter werden nicht nur reine Phenole, sondern gegebenenfalls auch substituierte Phenole verstanden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen.

Durch die Art und Stellung eines solchen Substituenten wird unter anderem die für die Bildung des Polyurethanprepolymers nötige Reaktion mit Isocyanaten beeinflusst.

Besonders eignen sich die Bis- und Trisphenole. Als Bisphenole oder Trisphenole sind beispielsweise geeignet 1,4-Dihydroxybenzol, 1,3-Dihydroxybenzol, 1,2-Dihydroxybenzol, 1,3-Dihydroxytoluol, 3,5-Dihydroxybenzoate, 2,2-Bis(4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methanoindan, Phenolpthalein, Fluorescein, 4,4'-[bis-(hydroxyphenyl)-1,3-Phenylene-bis-(1-Methyl-ethyliden)] (=Bisphenol-M), 4,4'-[bis-(hydroxyphenyl)-1,4-Phenylenbis-(1-Methyl-ethyliden)] (=Bisphenol-P), 2,2'-Diallyl-bisphenol-A, Diphenole und Dikresole hergestellt durch Umsetzung von Phenolen oder Kresolen mit Di-isopropylidenbenzol, Phloroglucin, Gallsäureester, Phenol- oder Kresolnovolacke mit -OH-Funktionalität von 2,0 bis 3,5 sowie alle Isomeren der vorgenannten Verbindungen.

In einer ersten Ausführungsform wird das Polyurethanprepolymer aus mindestens einem Diisocyanat oder Triisocyanat sowie aus einem Polymeren **Q_{PM}** mit endständigen Amino-, Thiol- oder Hydroxylgruppen hergestellt. Die Herstellung des Polyurethanprepolymers erfolgt in einer dem Polyurethan-Fachmann bekannten Art und Weise, insbesondere, indem das Diisocyanat oder Triisocyanat in einem stöchiometrischen Überschuss in Bezug auf die Amino-, Thiol- oder Hydroxylgruppen des Polymeren **Q_{PM}** eingesetzt wird.

In einer zweiten Ausführungsform wird das Polyurethanprepolymer aus mindestens einem Diisocyanat oder Triisocyanat sowie aus einem, gegebenenfalls substituierten, Polyphenol **Q_{PP}** hergestellt. Die Herstellung des Polyurethanprepolymers erfolgt in einer dem Polyurethan-Fachmann bekannter Art und Weise, insbesondere indem das Diisocyanat oder Triisocyanat in einem stöchiometrischen Überschuss in Bezug auf die phenolischen Gruppen des Polyphenols **Q_{PP}** eingesetzt wird.

In einer dritten Ausführungsform wird das Polyurethanprepolymer aus mindestens einem Diisocyanat oder Triisocyanat sowie aus einem Polymeren **Q_{PM}** mit endständigen Amino-, Thiol- oder Hydroxylgruppen sowie aus einem, gegebenenfalls substituierten, Polyphenol **Q_{PP}** hergestellt. Zur Herstellung des Polyurethanprepolymers aus mindestens einem Diisocyanat oder Triisocyanat sowie aus einem Polymeren **Q_{PM}** mit endständigen Amino-, Thiol- oder Hydroxylgruppen und / oder aus einem, gegebenenfalls substituierten, Polyphenol **Q_{PP}** stehen unterschiedliche Möglichkeiten zur Verfügung.

Besonders bevorzugt ist die erste Ausführungsform.

Das Polyurethanprepolymer mit Isocyanatendgruppen weist bevorzugt elastischen Charakter auf. Es zeigt bevorzugt eine Glasumwandlungstemperatur Tg von kleiner als 0°C.

Vorzugsweise beträgt der Anteil an:
Zähigkeitsverbesserer **D1** 10-60 Gew.-%, insbesondere 20-40 Gew.-%;
Zähigkeitsverbesserer **D2** 10-30 Gew.-%, insbesondere 20-30 Gew.-%:
   Zähigkeitsverbesserer **D3** 10-30 Gew.-%, insbesondere 20-30 Gew.-%; bezogen auf das Gesamtgewicht des Epoxidharzklebstoffs.

In einer bevorzugten Ausführungsform enthält der einkomponentige hitzehärtende Epoxidharzklebstoff zusätzlich mindestens 5-40 Gewichts-%, vorzugsweise 5-20 Gewichts-%, bezogen auf das Gesamtgewicht der Epoxidharzzusammensetzung, von einem Füllstoff **F** ausgewählt aus der Gruppe bestehend aus Calciumcarbonat und Calciumoxid.

Weiter kann es vorteilhaft sein, wenn der Anteil von Kieselsäuren (pyrogen oder gefällt), bezogen auf das Gesamtgewicht des Epoxidharzklebstoffs, kleiner als 5 Gewichts-%, kleiner als 2 Gewichts-%, kleiner als 1 Gewichts-%, kleiner als 0.5 Gewichts-%, insbesondere kleiner als 0.1 Gewichts-%, ist. Besonders bevorzugt ist der Epoxidharzklebstoff frei von Kieselsäuren (pyrogen oder gefällt).

Der einkomponentige hitzehärtende Epoxidharzklebstoff kann weiter zusätzlich mindestens 0.1 - 15 Gewichts-%, vorzugsweise 0.1-5 Gewichts-%,insbesondere bevorzugt 0.1-2 Gewichts-%, besonders bevorzugt 0.2 - 1Gewichts-%, bezogen auf das Gesamtgewicht der Epoxidharzzusammensetzung, von einem Epoxidgruppen-tragenden Reaktivverdünner **G** aufweisen. Solche Reaktivverdünner sind dem Fachmann bekannt. Bevorzugte Beispiele für Epoxidgruppen-tragende Reaktivverdünner sind:
- Glycidylether von monofunktionellen gesättigten oder ungesättigten, verzweigten oder unverzweigten, zyklischen oder offenkettigen C₄ - C₃₀ Alkoholen, z.B. Butanolglycidylether, Hexanolglycidylether, 2-Ethylhexanolglycidylether, Allylglycidylether, Tetrahydrofurfuryl- und Furfurylglycidylether, Trimethoxysilylglycidylether etc.
- Glycidylether von difunktionellen gesättigten oder ungesättigten, verzweigten oder unverzweigten, zyklischen oder offenkettigen C₂ - C₃₀ Alkolen, z.B Ethylenglykol-, Butandiol-, Hexandiol-, Oktandiolgylcidylether, Cyclohexandimethanoldigylcidylether, Neopentylglycoldiglycidylether etc.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin, Trimethylolpropan etc.
- Glycidylether von Phenol- und Anilinverbindungen wie Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin etc.
- Epoxidierte Amine wie N, N-Diglycidylcyclohexylamin etc.
- Epoxidierte Mono- oder Dicarbonsäuren wie Neodecansäure-glycidylester, Methacrylsäureglycidylester, Benzoesäureglycidylester, Phthalsäure-, Tetra- und Hexahydrophthalsäurediglycidylester, Diglycidylester von dimeren Fettsäuren etc.
- Epoxidierte di- oder trifunktionelle, nieder- bis hochmolekulare Polyetherpolyole wie Polyethylenglycol-diglycidylether, Polypropyleneglycol-diglycidylether etc.

Besonders bevorzugt sind Hexandioldiglycidylether, Kresylglycidylether, p-tert.-Butylphenylglycidylether, Polypropylenglycoldiglycidylether und Polyethylenglycoldiglycidylether.

Der einkomponentige hitzehärtende Epoxidharzklebstoff kann weitere Bestandteile, insbesondere Katalysatoren, Stabilisatoren, insbesondere Hitze- und/oder Lichtstabilisatoren, Thixotropiermittel, Weichmacher, Lösungsmittel, mineralische oder organische Füllstoffe, Treibmittel, Farbstoffe und Pigmente, Korrosionsschutzmittel, Tenside, Entschäumer und Haftvermittler umfassen.

Der einkomponentige wärmehärtende Epoxidharzklebstoff der vorliegenden Erfindung umfasst:
- 10 - 60 Gew.-%, insbesondere 30 - 50 Gew.-%, bezogen auf das Gesamtgewicht der Epoxidharzzusammensetzung, Epoxidharz mit durchschnittlich mehr als einer Epoxidgruppe pro Molekül; vorzugsweise handelt es sich bei 50-100 Gew.-%, insbesondere 80-100 Gew.-%, des Epoxidharzes um ein Epoxid-Flüssigharz und bei 0-30 Gew.-%, insbesondere 0-20 Gew.-%, besonders bevorzugt 5-15 Gew.-%, des Epoxidharzes um ein Epoxid-Festharz;.
- 1 - 10 Gew.-%, insbesondere 2 - 6 Gew.-%, bezogen auf das Gesamtgewicht der Epoxidharzzusammensetzung, mindestens eines latenten Härters für Epoxidharze;
- 2-7 Gew.-%, insbesondere 2-6.5 Gew.-%, 2-5 Gew.-%, 2-4 Gew.-%, Aerogelpartikel, bezogen auf das Gesamtgewicht des einkomponentigen hitzehärtenden Epoxidharzklebstoffs;
- mindestens einen Zähigkeitsverbesserer **D**, ausgewählt ist aus der Gruppe bestehend aus endständig blockierten Polyurethanpolymeren **D1**, Flüssigkautschuken **D2** und Core-Shell-Polymeren **D3**, vorzugsweise beträgt dabei der Anteil an:
   Zähigkeitsverbesserer **D1** 10-60 Gew.-%, insbesondere 20-40 Gew.-%;
   Zähigkeitsverbesserer **D2** 10-30 Gew.-%, insbesondere 20-30 Gew.-%:
      Zähigkeitsverbesserer **D3** 10-30 Gew.-%, insbesondere 20-30 Gew.-%;
      bezogen auf das Gesamtgewicht der Epoxidharzzusammensetzung;
         - vorzugsweise 5 - 40 Gewichts-%, vorzugsweise 5 - 20 Gewichts-%, bezogen auf das Gesamtgewicht der Epoxidharzzusammensetzung, von einem Füllstoffe **F** ausgewählt aus der Gruppe bestehend aus Calciumcarbonat und Calciumoxid;
         - vorzugsweise 0.1 - 15 Gewichts-%, vorzugsweise 0.1 - 5 Gewichts-%, insbesondere bevorzugt 0.1 - 2 Gewichts-%, besonders bevorzugt 0.2 - 1 Gewichts-%, bezogen auf das Gesamtgewicht der Epoxidharzzusammensetzung, von einem Epoxidgruppen-tragenden Reaktivverdünner G,
         wobei der einkomponentige hitzehärtende Epoxidharzklebstoff zu mehr als 95 Gewichts-%, insbesondere bevorzugt mehr als 98 Gewichts-%, am meisten bevorzugt mehr als 99 Gewichts-%, bezogen auf das Gesamtgewicht der Epoxidharzzusammensetzung, aus den vorgenannten Bestandteilen besteht.

Der einkomponentige hitzehärtende Epoxidharzklebstoff weist eine Viskosität von 1000 Pas - 4'000 Pas bei 25°C, insbesondere 1000 Pas - 3`500 Pas bei 25°C auf. Besonders bevorzugt weist die Viskosität bei 25 °C einen Wert zwischen 1000 Pas und 3000 Pas auf. Meist bevorzugt beträgt die Viskosität bei 25 °C zwischen 1100 Pas und 2800 Pas.

Die Viskosität wird hierbei oszillographisch mittels eines Rheometers mit beheizbarer Platte, wobei das Rheometer ist das MCR 301 von Anton Paar, und Die Rheometerbedingungen umfassen einen Spalt von 1000 µm, ein Mess-Plattendurchmesser von 25 mm, Platte/Platte, Deformation 0,01 bei 5 Hz und eine Temperatur von 25° C.

Bei 60°C weist der Klebstoff vorteilhaft eine Viskosität (entsprechend bei 60°C gemessen) zwischen 600 Pas und 50 Pas auf. Bei 50°C weist der Klebstoff vorteilhaft eine Viskosität (entsprechend bei 50°C gemessen) zwischen 800 Pas und 150 Pas auf.

Ein weiterer Aspekt der vorliegenden Erfindung betrifft ein Verfahren zur Verklebung von Substraten, insbesondere Metallsubstraten, umfassend die Schritte
a) Applikation eines erfindungsgemäßen einkomponentigen hitzehärtenden Epoxidharzklebstoffs wie vorstehend definiert auf ein erstes Substrat, insbesondere Metallsubstrat;
b) Kontaktieren des applizierten Epoxidharzklebstoffs mit einem zweiten Substrat, insbesondere Metallsubstrat, unter Bildung eines Klebverbunds; und
c) Aushärten des Epoxidharzklebstoffs im Klebverbund bei einer Temperatur im Bereich von 100 bis 220 °C.

Das erste und/oder zweite Substrat, insbesondere Metallsubstrat, können jeweils als solche oder als Teil eines Gegenstands, d.h. eines Gegenstands, der das erste bzw. zweite Substrat, insbesondere Metallsubstrat, umfasst, eingesetzt werden. Bevorzugt werden die Substrate, insbesondere Metallsubstrate, als solche eingesetzt. Das erste und das zweite Substrat, insbesondere Metallsubstrat, können aus dem gleichen oder einem unterschiedlichen Material sein.

Das erste und/oder zweite Substrat sind bevorzugt Metallsubstrate. Es sind aber gegebenenfalls auch hitzebeständige Kunststoffe wie z.B. Polyamide (PA), Polyphenylenether, z.B. Noryl^{®}, oder carbonfaserverstärkte Kunststoffe (CFK) als erstes und/oder zweites Substrat denkbar.

Als erstes und/oder zweites Metallsubstrat sind grundsätzlich alle vom Fachmann bekannten Metallsubstrate geeignet, insbesondere in Form eines Blechs, wie sie z.B. im Transportmittelbau, z.B. in der Automobilindustrie, oder bei der Herstellung von Weisswaren benutzt werden.

Beispiele für das erste und/oder zweite Metallsubstrat sind Metallsubstrate, insbesondere Bleche, aus Stahl, insbesondere elektrolytisch verzinktem Stahl, feuerverzinktem Stahl oder beöltem Stahl, Bonazinkbeschichtetem Stahl, und nachträglich phosphatiertem Stahl, sowie Aluminium insbesondere in den im Autobau typischerweise vorkommenden Varianten und sowie Magnesium oder Magnesiumlegierungen.

Das erste und/oder zweite Metallsubstrat sind aber besonders bevorzugt ein Metallsubstrat, insbesondere ein Blech, ausgewählt aus Stahl mit einem Zink-Magnesium Überzug, feuerverzinktem Stahl mit einer Zinksulfat und/oder Zinkhydroxysulfat umfassenden Beschichtung, kaltgewalztem Stahl, Aluminium, Aluminiumlegierung oder einem Metall, insbesondere Stahl, mit einem Überzug aus Aluminium oder einer Aluminiumlegierung, Metallsubstraten, insbesondere Stahlsubstraten, mit einer Umformhilfe als Beschichtung, und Magnesium oder Magnesiumlegierungen.

Der einkomponentige hitzehärtende Epoxidharzklebstoff wird im Schritt (a) des erfindungsgemässen Verfahrens auf das erste Substrat, insbesondere Metallsubstrat, aufgetragen. Dies erfolgt z.B. bei einer Applikationstemperatur des Klebstoffs von 10°C bis 80°C, bevorzugt von 15°C bis 60°C, bevorzugter von 30 bis 60°C. Die Applikation erfolgt vorzugsweise in Form einer Klebstoffraupe. Ein automatischer Auftrag ist bevorzugt.

Der Klebstoffauftrag kann auf der ganzen Oberfläche oder auf einem Teil der Oberfläche des ersten Substrats, insbesondere Metallsubstrats, erfolgen. In einer typischen Anwendung kann der Klebstoff z.B. nur in einem Randbereich des Substrats, insbesondere Metallsubstrats, appliziert werden.

In einem weiteren Schritt b) wird der auf dem ersten Substrat, insbesondere Metallsubstrat, applizierte Epoxidharzklebstoff mit dem zweiten Substrat, insbesondere Metallsubstrat, kontaktiert, um einen Klebverbund zu bilden.

Zur Aushärtung des Epoxidharzklebstoffs im Klebverbund wird der Klebstoff auf eine Temperatur im Bereich von 100 bis 220 °C, bevorzugt 120 bis 200°C, erhitzt. Die Erhitzung kann z.B. durch Infrarotstrahlung, Induktionsheizung oder in einem Ofen, z.B. einem KTL-Ofen (KTL = Kathodische Tauchlackierung), erfolgen. Auf diese Weise wird der Klebverbund mit dem gehärteten Epoxidharzklebstoff erhalten.

Vorzugsweise wird zwischen Schritt b) und Schritt c) ein Schritt b`) ausgeführt wird, wobei Schritt b') umfasst: In Kontakt bringen der Substrate und des damit in Kontakt stehenden einkomponentigen hitzehärtenden Epoxidharzklebstoffs mit einer Waschflüssigkeit bei einer Temperatur zwischen 20 und 100°C, insbesondere zwischen 40 und 70°C; bevorzugt zwischen 50 und 70°C.

Schritt b') erfolgt typischerweise durch Abspritzen mittels einer Waschflüssigkeit oder durch Eintauchen in ein Waschbad. Typischerweise erfolgt dieser Waschprozess bei einer Temperatur von zwischen 40 und 70°C; bevorzugt zwischen 50 und 70°C. Als Waschflüssigkeit dient insbesondere Wasser. Weiterhin kann die Waschflüssigkeit weitere Bestandteile insbesondere Tenside und/oder Lösungsmittel enthalten. Beim Abspritzen werden vielfach mit ziemlich hohem Druck durchgeführt. Drucke von bis zu 4 bar sind durchaus üblich.

Die Aushärtung des Epoxidharzklebstoffs im Klebverbund kann in einem Schritt erfolgen, es ist aber auch eine Aushärtung in zwei oder mehr Schritten möglich, wobei zwischen oder während den Aushärtungsschritte zusätzlich Arbeitsschritte, z.B. eine Wäsche und/oder eine Tauchlackierung, z.B. eine KTL-Tauchlackierung, eines oder beider Substrate, insbesondere Metallsubstrate, mit anschließender Wäsche, zwischengeschaltet werden können.

Die Epoxidharzzusammensetzung im Klebverbund kann z.B. in einem ersten Schritt auf eine Temperatur von 100 bis 130 °C, bevorzugt von 115 bis 125°C, und in einem zweiten Schritt auf eine Temperatur von 140 - 220°C, insbesondere von 140 - 200°C, bevorzugt zwischen 160 - 190°C, erhitzt werden.

Zwischen den beiden Schritten können weitere Arbeitsschritte erfolgen, z.B. eine Kontaktierung mit einer Waschflüssigkeit, z.B. bei einer Temperatur von 20 bis 100°C, bevorzugt 40 und 70°C, und/oder eine Tauchlackierung eines oder beider Substrate, insbesondere Metallsubstrate, in einem KTL-Bad, wobei die Härtung des Epoxidharzklebstoff im zweiten Schritt z.B. gleichzeitig mit der Härtung des aufgebrachten Tauchlacks durchgeführt werden kann.

Der erfindungsgemäße einkomponentige hitzehärtende Epoxidharzklebstoff und das erfindungsgemäße Verfahren eignen sich insbesondere zur Verklebung von Substraten, insbesondere Metallsubstraten, für die Herstellung von Transportmitteln, insbesondere Automobilen, Bussen, Lastkraftwagen, Schienenfahrzeugen, Schiffen oder Luftfahrzeugen, oder Weisswaren, insbesondere Waschmaschinen, Tumbler oder Geschirrspülern, oder Teilen davon, bevorzugt Fahrzeugen oder Anbauteilen davon.

Ein weiterer Aspekt der Erfindung betrifft einen Artikel, umfassend einen gehärteten Klebverbund, wobei der Klebverbund nach dem vorstehend beschriebenen erfindungsgemäßen Verfahren erhältlich ist.

Der Artikel kann z.B. ein Transportmittel, insbesondere ein Automobil, Bus, Lastkraftwagen, Schienenfahrzeug, Schiff oder Luftfahrzeug, oder eine Weissware, insbesondere eine Waschmaschine, ein Tumbler oder ein Geschirrspüler, oder ein Teil eines solchen Artikels sein. Der Artikel ist vorzugsweise ein Fahrzeug oder ein Anbauteil eines Fahrzeugs.

Ein weiterer Aspekt der Erfindung betrifft die Verwendung des erfindungsgemäßen einkomponentigen hitzehärtenden Epoxidharzklebstoffs wie vorstehend beschrieben zur wärmebeständigen Verklebung von Substraten, insbesondere Metallsubstraten, bevorzugt Metallsubstraten aus Stahl mit einem Zink-Magnesium Überzug, feuerverzinktem Stahl mit einer Zinksulfat und/oder Zinkhydroxysulfat umfassenden Beschichtung, kaltgewalztem Stahl, Aluminium, Aluminiumlegierung oder einem Metall, insbesondere Stahl, mit einem Überzug aus Aluminium oder einer Aluminiumlegierung.

Ein weiterer Aspekt der Erfindung betrifft die Verwendung von Aerogelpartikeln, wie sie vorgehend beschrieben sind, zur Erhöhung der Auswaschbeständigkeit eines einkomponentigen hitzehärtenden Epoxidharzklebstoffs, insbesondere eines hitzehärtenden Epoxidharzklebstoffs im Fahrzeugbau.

Ein weiterer Aspekt der Erfindung betrifft die Verwendung von Aerogelpartikeln, wie sie vorgehend beschrieben sind, zur Erhöhung der Schlagschälfestigkeit/Impact peel (I-Peel) (gemäss ISO 11343), insbesondere zwischen 23 °C bis - 30°C, eines einkomponentigen hitzehärtenden Epoxidharzklebstoffs, insbesondere eines hitzehärtenden Epoxidharzklebstoffs im Fahrzeugbau.

Im Folgenden wird die Erfindung durch Beispiele weiter erläutert, die die Erfindung aber in keiner Weise einschränken sollen.

### Beispiele

### Herstellung der Zusammensetzungen

Es wurden gemäss den Angaben in den Tabellen 1 und 2 die Referenzzusammensetzungen Ref.1 - Ref. 6 sowie die erfindungsgemässen Zusammensetzungen Ex.1 und Ex.2 hergestellt. Die Mengenangaben in den Tabellen 1 und 2 sind in Gewichtsteilen angegeben.

**Tabelle 1, Eingesetzte Rohstoffe für Zusammensetzung ZA**

| **Rohstoffe** | **(Gew.-%)** |
|---|---|
| Epoxy-Flüssigharz, D.E.R. 331 (Bisphenol-A-diglycidylether), Dow | 50 |
| Reaktivverdünner, Hexandiol-glycidylether, Denacol EX-212, Nagase America | 1 |
| Zähigkeitsverbesserer D-1 | 20 |
| Härter, Dicyandiamid (= "Dicy") | 4 |
| Beschleuniger, substituierter Harnstoff | 0.2 |
| Füllstoffgemisch, Gemisch aus Calciumcarbonat und Calciumoxid | 24.8 |
| **Total (Gew.-%)** | **100** |

### Herstellung eines Zähigkeitsverbesserers ("D-1")

150 g Poly-THF 2000 (OH-Zahl 57 mg/g KOH) und 150 g PolyBD R45V (OH-Zahl 46 mg/g KOH) wurden 30 Minuten unter Vakuum bei 105°C getrocknet. Nachdem die Temperatur auf 90°C reduziert worden war, wurden 61.5 g IPDI und 0.14 g Dibutylzinndilaurat zugegeben. Die Reaktion wurde unter Vakuum bei 90°C bis zur Konstanz des NCO-Gehaltes bei 3.10% nach 2.0 h geführt (berechneter NCO-Gehalt: 3.15%). Anschliessend wurden 96.1 g Cardanol als Blockierungsmittel zugegeben. Es wurde bei 105°C unter Vakuum weitergerührt bis kein freies NCO mehr nachgewiesen werden konnte. Das Produkt wurde so als Zähigkeitsverbesserer D-1 verwendet.

| |
|---|
| Poly-THF 2000 (Difunktionelles Polybutylenglykol) |
| (OH-Equivalentgewicht = ca. 1000 g/OH-Equivalent), BASF |
| PolyBD R45V (Hydroxylterminertes Polybutadien) |
| (OH-Equivalentgewicht = ca. 1230 g/OH-Equivalent), Cray Valley |
| Isophoron-diisocyanat (= "IPDI"), Evonik |
| Cardolite NC-700 (Cardanol, meta-substituiertes Alkenyl-mono-Phenol), Cardolite |

**Tabelle 2, "n.b." - nicht bestimmt, pyrogene Kieselsäure: Wacker, Aerogelpartikel: Aerogel Cabot P300, Cabot Corp. (Billerica, MA, USA).**

| | | Ref 1 | Ref2 | Ref3 | Ref4 | Ref5 | Ex1 | Ex2 | Ref6 |
|---|---|---|---|---|---|---|---|---|---|
| Zusammensetzung (Gew.-%) | **ZA** | 100 | 98 | 96 | 93.5 | 98.4. | 96.7 | 93.5 | 92 |
| Aerogelpartikel (Gew.-%) | | - | - | - | - | 1.6 | **3.3** | **6.5** | 8 |
| pyrogene Kieselsäure (Gew.-%) | | - | 1.6 | 3.3 | 6.5 | - | - | - | - |
| Total (Gew.-%) | | 100 | 100 | 100 | 100 | 100 | 100 | 100 | 100 |
| **IP (23°C) (MPa)** | | <15 | n.b. | n.b. | n.b. | 18.6 | 22.3 | n.b. | n.b. |
| **IP (-30°C) (MPa)** | | <8 | n.b. | n.b. | n.b. | 11.2 | 13.2 | 8.0 | n.b. |
| Wash out | | 6 | 6 | 4 | 1 | 6 | 1 | 0 | 0 |
| Viskosität (Pas) | | <500 | n.b. | n.b. | n.b. | n.b. | 1000-2000 | 3000-4000 | 6500 |

### Auswaschbeständigkeit (wash out)

Zur Bestimmung der Auswaschbeständigkeit wurde die jeweilige Zusammensetzung bei Raumtemperatur als Dreiecksraupe (Breite 8 mm, Höhe 10 mm) auf ein beöltes Blech (200 x 25 mm, elektrolytisch verzinkt) appliziert. Das Blech weist je ein Loch an beiden Blechenden (∅ 8 mm, mittig, Abstand 10 mm zum Blechende) zur Befestigung am Drehgestell auf. Im Anschluss wurde die Probe eine Stunde bei Raumtemperatur konditioniert.

Anschliessend wurde diese Bleche in ein Drehgestell montiert und in ein mit 55°C warmen Wasser gefüllten Behälter bei einer Drehzahl des Rührers von 60 rpm bis zur Hälfte ins Wasser gehängt und für 10 min gedreht. Der Abstand der Bleche von der Achse des Drehgestells gemessen beträgt 120 mm.

Nach der Durchführung des Tests wird die Deformation der Raupe nach folgender Skala bewertet:
0: Unverändert gegenüber Ausgangszustand
1: Geringe Deformation
2: Deutliche Deformation ohne Materialabwaschung
3: Starke Deformation, jedoch ohne Materialabwaschung
4: Sehr starke Deformation mit Materialabwaschung
5: Materialabtrag, jedoch ist die ursprünglich benetzte Fläche noch mit Material bedeckt
6: Bis auf geringe Restmengen fast vollständiger Materialabtrag

Als auswaschbeständig wurden diejenigen Proben bezeichnet, die einen Wert von 0 bis 3 aufwiesen.

### Viskosität

Die Viskosität wurde oszillographisch mittels eines Rheometers mit beheizbarer Platte (MCR 301, AntonPaar) bei der angegebenen Temperatur gemessen (Spalt 1000 µm, Mess-Plattendurchmesser: 25 mm (Platte/Platte), Deformation 0,01 bei 5 Hz, Aufheizrate 10°C/min).

### Schlagschälfestigkeit/Impact peel (I-Peel) (gemäss ISO 11343)

Die Probenkörper wurden mit dem Klebstoff und Stahl DC04+ZE mit dem Mass 90 x 20 x 0,8mm hergestellt. Dabei betrug die Klebfläche 20 x 30mm bei einer Schichtdicke von 0,2mm und Glaskugeln als Abstandshalter. Die Proben wurden für 25 min bei 180°C Ofentemperatur ausgehärtet.

Die Messung der Schlagschälfestigkeit erfolgte jeweils bei den angegebenen Temperaturen (23°C, -30°C) als Dreifachbestimmung auf einem Zwick 450 Schlagpendel. Als Schlagschälfestigkeit, wird die gemittelte Kraft in N/mm unter der Messkurve von 25% bis 90% gemäss ISO11343 angegeben.

### Ergebnisse

Aus der Tabelle 2 ist ersichtlich, dass bei der Verwendung von weniger als 2 Gew.-% Aerogelpartikeln keine ausreichende Auswaschbeständigkeit erreicht wird und bei der Verwendung von mehr als 7 Gew.-% Aerogelpartikeln die Viskosität einen zu hohen Wert erreicht.

Überraschenderweise wurde gefunden, dass im Bereich von 2-7 Gew.-% Aerogelpartikeln eine sehr gute Auswaschbeständigkeit erhalten wird, welcher der Verwendung von pyrogener Kieselsäure überlegen ist.

Weiter wurde überraschenderweise gefunden, dass Zusammensetzungen enthaltend 3.3 Gew.-% Aerogelpartikeln gegenüber Zusammensetzungen enthaltend kein oder 1.6 Gew.-% Aerogelpartikeln, hohe Werte der Schlagschälfestigkeit bei - 30°C aufweisen. Dasselbe Verhalten wurde auch bei der Schlagschälfestigkeit bei 23°C beobachtet.

## Patentansprüche

1. Einkomponentiger hitzehärtender Epoxidharzklebstoff, umfassend:
- 10 - 60 Gew.-%, insbesondere 30 - 50 Gew.-%, bezogen auf das Gesamtgewicht der Epoxidharzzusammensetzung, Epoxidharz mit durchschnittlich mehr als einer Epoxidgruppe pro Molekül;
- 1 - 10 Gew.-%, insbesondere 2 - 6 Gew.-%, bezogen auf das Gesamtgewicht der Epoxidharzzusammensetzung, mindestens eines latenten Härters für Epoxidharze;
- 2-7 Gew.-%, insbesondere 2-6.5 Gew.-%, 2-5 Gew.-%, 2-4 Gew.-%, Aerogelpartikel, bezogen auf das Gesamtgewicht des einkomponentigen hitzehärtenden Epoxidharzklebstoffs;
- mindestens einen Zähigkeitsverbesserer **D**, ausgewählt ist aus der Gruppe bestehend aus endständig blockierten Polyurethanpolymeren **D1**, Flüssigkautschuken **D2** und Core-Shell-Polymeren **D3**, vorzugsweise beträgt dabei der Anteil an:
Zähigkeitsverbesserer **D1** 10-60 Gew.-%, insbesondere 20-40 Gew.-%;
Zähigkeitsverbesserer **D2** 10-30 Gew.-%, insbesondere 20-30 Gew.-%:
Zähigkeitsverbesserer **D3** 10-30 Gew.-%, insbesondere 20-30 Gew.-%;
bezogen auf das Gesamtgewicht der Epoxidharzzusammensetzung;
- vorzugsweise 5 - 40 Gewichts-%, vorzugsweise 5 - 20 Gewichts-%, bezogen auf das Gesamtgewicht der Epoxidharzzusammensetzung, von einem Füllstoffe **F** ausgewählt aus der Gruppe bestehend aus Calciumcarbonat und Calciumoxid;
- vorzugsweise 0.1 - 15 Gewichts-%, vorzugsweise 0.1 - 5 Gewichts-%, insbesondere bevorzugt 0.1 - 2 Gewichts-%, besonders bevorzugt 0.2 - 1 Gewichts-%, bezogen auf das Gesamtgewicht der Epoxidharzzusammensetzung, von einem Epoxidgruppen-tragenden Reaktivverdünner **G**,
wobei der einkomponentige hitzehärtende Epoxidharzklebstoff zu mehr als 95 Gewichts-%, bezogen auf das Gesamtgewicht der Epoxidharzzusammensetzung, aus den vorgenannten Bestandteilen besteht, und wobei der Epoxidharzklebstoff eine Viskosität von 1000 - 4000 Pas, insbesondere 1000 - 3500 Pas, bei 25°C aufweist, wobei die Viskosität oszillographisch bestimmt wird mittels eines Rheometers vom Typ MCR 301, AntonPaar mit beheizbarer Platte, bei den Messbedingungen von einem Spalt von 1000 µm, einem Mess-Plattendurchmesser von 25 mm (Platte/Platte), einer Deformation von 0,01 bei 5 Hz bei einer Temperatur von 25°C.

2. Einkomponentiger hitzehärtender Epoxidharzklebstoff nach Anspruch 1, wobei es sich um amorphe Siliciumdioxid-Aerogelpartikel handelt, insbesondere mit Trimethylsilylgruppen oberflächenmodifizierte Siliciumdioxid-Aerogelpartikel.

3. Einkomponentiger hitzehärtender Epoxidharzklebstoff nach Anspruch 1 oder 2, wobei die Partikeldichte der Aerogelpartikel 90-200 kg/m³, insbesondere von 110-190 kg/m³, beträgt.

4. Einkomponentiger hitzehärtender Epoxidharzklebstoff nach einem der vorgehenden Ansprüche, wobei die Aerogelpartikel eine mittlere Partikelgrösse von 0.01 - 5 mm, vorzugsweise 0.1 - 4 mm, insbesondere bevorzugt 1 - 4 mm, aufweisen.

5. Einkomponentiger hitzehärtender Epoxidharzklebstoff nach einem der vorgehenden Ansprüche, wobei es sich bei dem mindestens einen Zähigkeitsverbesserer **D** um ein endständig blockiertes Polyurethanpolymer **D1**, handelt, insbesondere um ein endständig blockiertes Polyurethanprepolymer der Formel (I); 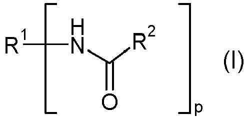
wobei R¹ für einen p-wertigen Rest eines mit Isocyanatgruppen terminierten linearen oder verzweigten Polyurethanprepolymers nach dem Entfernen der endständigen Isocyanatgruppen steht;
p für einen Wert von 2 bis 8 steht; und
R² unabhängig voneinander für einen Substituenten steht, welcher ausgewählt ist aus der Gruppe bestehend aus 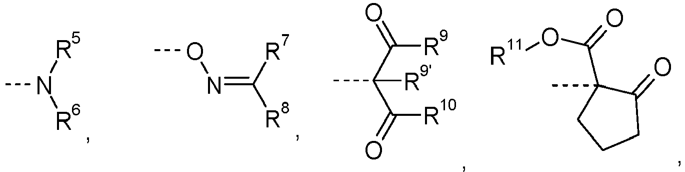 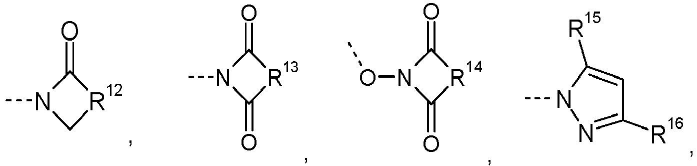 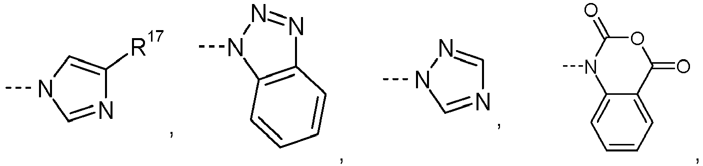 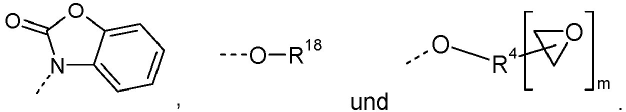 wobei
R⁵, R⁶, R⁷ und R⁸ je unabhängig voneinander für eine Alkyl- oder Cycloalkyl- oder Aralkyl- oder Arylalkyl-Gruppe steht
oder R⁵ zusammen mit R⁶, oder R⁷ zusammen mit R⁸, einen Teil eines 4- bis 7-gliedrigen Rings bilden, welcher gegebenenfalls substituiert ist;
R⁹, R^{9'} und R¹⁰ je unabhängig voneinander für eine Alkyl- oder Aralkyl- oder Arylalkyl-Gruppe oder für eine Alkyloxy- oder Aryloxy- oder Aralkyloxy-Gruppe steht;
R¹¹ für eine Alkylgruppe steht,
R¹², R¹³ und R¹⁴ je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe stehen;
R¹⁵, R¹⁶ und R¹⁷ je unabhängig voneinander für H oder für eine Alkylgruppe oder für eine Arylgruppe oder eine Aralkylgruppe stehen; und
R¹⁸ für eine Aralkylgruppe oder für eine ein- oder mehrkernige substituierte oder unsubstituierte Aromatengruppe steht, welche gegebenenfalls aromatische Hydroxylgruppen aufweist;
R⁴ für einen Rest eines eine primäre oder sekundäre Hydroxylgruppe enthaltenden aliphatischen, cycloaliphatischen, aromatischen oder araliphatischen Epoxids nach dem Entfernen der Hydroxy- und Epoxidgruppen steht;
und m für einen Wert von 1, 2 oder 3 steht.

6. Einkomponentiger hitzehärtender Epoxidharzklebstoff nach irgendeinem der vorgehenden Ansprüche, wobei der Epoxidharzklebstoff eine Viskosität zwischen 1000 Pas und 3000 Pas bei 25°C, insbesondere zwischen 1100 Pas und 2800 Pas, bei 25°C aufweist.

7. Einkomponentiger hitzehärtender Epoxidharzklebstoff nach irgendeinem der vorgehenden Ansprüche, wobei der latente Härter ausgewählt ist aus Dicyandiamid, Guanaminen, Guanidinen, Aminoguanidinen und deren Derivaten, substituierten Harnstoffen, Imidazolen und Amin-Komplexen, wobei Dicyandiamid bevorzugt ist.

8. Verfahren zur Verklebung von Substraten, insbesondere Metallsubstraten, umfassend die Schritte
a) Applikation eines einkomponentigen hitzehärtenden Epoxidharzklebstoffs nach irgendeinem der Ansprüche 1 bis 7 auf ein erstes Substrat, insbesondere ein erstes Metallsubstrat;
b) Kontaktieren des applizierten Epoxidharzklebstoffs mit einem zweiten Substrat, insbesondere einem zweiten Metallsubstrat, unter Bildung eines Klebverbunds; und
c) Aushärten des Epoxidharzklebstoffs im Klebverbund bei einer Temperatur im Bereich von 100 bis 220 °C.

9. Verfahren nach Anspruch 8, wobei zwischen Schritt b) und Schritt c) ein Schritt b') ausgeführt wird, wobei Schritt b') umfasst: In Kontakt bringen der Substrate und des damit in Kontakt stehenden einkomponentigen hitzehärtenden Epoxidharzklebstoffs mit einer Waschflüssigkeit bei einer Temperatur zwischen 20 und 100°C, insbesondere zwischen 40 und 70°C; bevorzugt zwischen 50 und 70°C.

10. Artikel, umfassend einen gehärteten Klebverbund, wobei der Klebverbund nach einem Verfahren nach irgendeinem der Ansprüche 8 oder 9 erhältlich ist.

11. Verwendung eines einkomponentigen hitzehärtenden Epoxidharzklebstoffs nach irgendeinem der Ansprüche 1 bis 7 zur wärmebeständigen Verklebung von Substraten.

12. Verwendung von Aerogelpartikeln, wie sie in dem einkomponentigen hitzehärtenden Epoxidharzklebstoff gemäss einem der Ansprüche 1 bis 7 beschrieben sind, zur Erhöhung der Auswaschbeständigkeit eines einkomponentigen hitzehärtenden Epoxidharzklebstoffs, insbesondere eines hitzehärtenden Epoxidharzklebstoffs im Fahrzeugbau.

13. Verwendung von Aerogelpartikeln, wie sie in dem einkomponentigen hitzehärtenden Epoxidharzklebstoff gemäss einem der Ansprüche 1 bis 7 beschrieben sind, zur Erhöhung der Schlagschälfestigkeit/Impact peel (I-Peel) (gemäss ISO 11343), insbesondere zwischen 23°C bis - 30°C, eines einkomponentigen hitzehärtenden Epoxidharzklebstoffs, insbesondere eines hitzehärtenden Epoxidharzklebstoffs im Fahrzeugbau.

## Claims

1. One-component thermosetting epoxy resin adhesive comprising:
- 10-60% by weight, especially 30-50% by weight, based on the total weight of the epoxy resin composition, of epoxy resin having an average of more than one epoxy group per molecule;
- 1-10% by weight, especially 2-6% by weight, based on the total weight of the epoxy resin composition, of at least one latent curing agent for epoxy resins;
- 2-7% by weight, especially 2-6.5% by weight, 2-5% by weight, 2-4% by weight, of aerogel particles, based on the total weight of the one-component thermosetting epoxy resin adhesive;
- at least one toughness improver **D** selected from the group consisting of terminally blocked polyurethane polymers **D1,** liquid rubbers **D2** and core-shell polymers **D3,** where the proportions are preferably as follows:
toughness improver **D1** 10-60% by weight, especially 20-40% by weight;
toughness improver **D2** 10-30% by weight, especially 20-30% by weight;
toughness improver **D3** 10-30% by weight, especially 20-30% by weight;
based on the total weight of the epoxy resin composition;
- preferably 5-40% by weight, preferably 5-20% by weight, based on the total weight of the epoxy resin composition, of a filler **F** selected from the group consisting of calcium carbonate and calcium oxide;
- preferably 0.1-15% by weight, preferably 0.1-5% by weight, especially preferably 0.1-2% by weight, more preferably 0.2-1% by weight, based on the total weight of the epoxy resin composition, of an epoxy group-bearing reactive diluent **G,**
wherein the one-component thermosetting epoxy resin adhesive consists of the aforementioned constituents to an extent of more than 95% by weight, based on the total weight of the epoxy resin composition,
and wherein the epoxy resin adhesive has a viscosity of 1000-4000 Pas, especially 1000-3500 Pas, at 25°C, determining the viscosity by oscillography by means of an Anton Paar MCR 301 rheometer with a heatable plate under the following measurement conditions: a gap of 1000 µm, a measurement plate diameter of 25 mm (plate/plate), a deformation of 0.01 at 5 Hz at a temperature of 25°C.

2. One-component thermosetting epoxy resin adhesive according to Claim 1, comprising amorphous silicon dioxide aerogel particles, especially silicon dioxide aerogel particles surface-modified with trimethylsilyl groups.

3. One-component thermosetting epoxy resin adhesive according to Claim 1 or 2, wherein the particle density of the aerogel particles is 90-200 kg/m³, especially 110-190 kg/m³.

4. One-component thermosetting epoxy resin adhesive according to any of the preceding claims, wherein the aerogel particles have an average particle size of 0.01-5 mm, preferably 0.1-4 mm, especially preferably 1-4 mm.

5. One-component thermosetting epoxy resin adhesive according to any of the preceding claims, wherein the at least one toughness improver **D** is a terminally blocked polyurethane polymer **D1,** especially a terminally blocked polyurethane prepolymer of the formula (I): 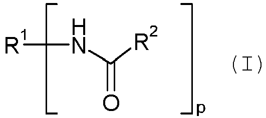
where R¹ is a p-valent radical of a linear or branched polyurethane prepolymer terminated by isocyanate groups after the removal of the terminal isocyanate groups;
p has a value of 2 to 8; and
R² is independently a substituent selected from the group consisting of 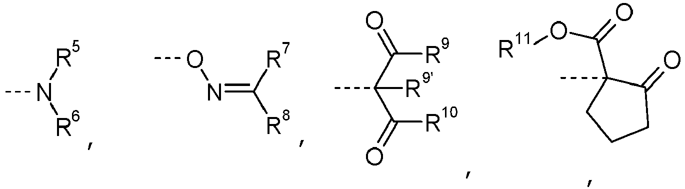 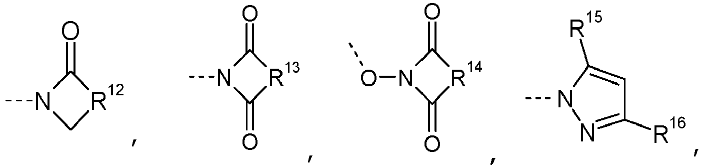 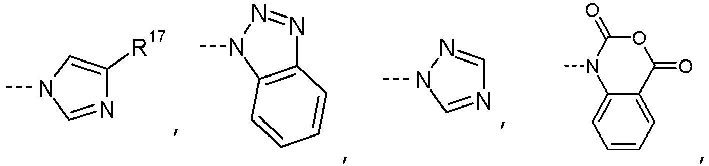 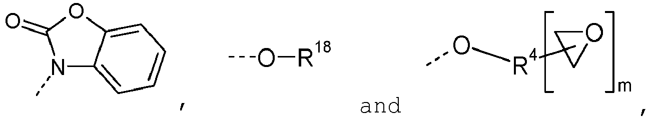 where
R⁵, R⁶, R⁷ and R⁸ are each independently an alkyl or cycloalkyl or aralkyl or arylalkyl group or R⁵ together with R⁶, or R⁷ together with R⁸, form part of a 4- to 7-membered, optionally substituted ring;
R⁹, R^{9'} and R¹⁰ are each independently an alkyl or aralkyl or arylalkyl group or an alkyloxy or aryloxy or aralkyloxy group;
R¹¹ is an alkyl group,
R¹², R¹³ and R¹⁴ are each independently an alkylene group which has 2 to 5 carbon atoms and optionally has double bonds or is substituted, or a phenylene group or a hydrogenated phenylene group;
R¹⁵, R¹⁶ and R¹⁷ are each independently H or an alkyl group or an aryl group or an aralkyl group; and
R¹⁸ is an aralkyl group or is a mono- or polycyclic, substituted or unsubstituted aromatic group optionally having aromatic hydroxyl groups;
R⁴ is a radical of an aliphatic, cycloaliphatic, aromatic or araliphatic epoxide containing a primary or secondary hydroxyl group after the removal of the hydroxyl and epoxy groups;
and m has a value of 1, 2 or 3.

6. One-component thermosetting epoxy resin adhesive according to any of the preceding claims, wherein the epoxy resin adhesive has a viscosity between 1000 Pas and 3000 Pas at 25°C, especially between 1100 Pas and 2800 Pas, at 25°C.

7. One-component thermosetting epoxy resin adhesive according to any of the preceding claims, wherein the latent curing agent is selected from dicyandiamide, guanamines, guanidines, aminoguanidines and derivatives thereof, substituted ureas, imidazoles and amine complexes, preference being given to dicyandiamide.

8. Method of bonding substrates, especially metal substrates, comprising the steps of
a) applying a one-component thermosetting epoxy resin adhesive according to any of Claims 1 to 7 to a first substrate, especially a first metal substrate;
b) contacting the epoxy resin adhesive applied with a second substrate, especially a second metal substrate, to form an adhesive bond; and
c) curing the epoxy resin adhesive in the adhesive bond at a temperature in the range from 100 to 220°C.

9. Method according to Claim 8, wherein a step b') is executed between step b) and step c), wherein step b') comprises: contacting the substrates and the one-component thermosetting epoxy resin adhesive in contact therewith with a wash liquid at a temperature between 20 and 100°C, especially between 40 and 70°C, preferably between 50 and 70°C.

10. Article comprising a cured adhesive bond, wherein the adhesive bond is obtainable by a method according to either of Claims 8 and 9.

11. Use of a one-component thermosetting epoxy resin adhesive according to any of Claims 1 to 7 for heatresistant bonding of substrates.

12. Use of aerogel particles as described in the one-component thermosetting epoxy resin adhesive according to any of Claims 1 to 7 for increasing the washout resistance of a one-component thermosetting epoxy resin adhesive, especially a thermosetting epoxy resin adhesive in motor vehicle construction.

13. Use of aerogel particles as described in the one-component thermosetting epoxy resin adhesive according to any of Claims 1 to 7 for increasing the impact peel (I-peel) strength (to ISO 11343), especially between 23°C and -30°C, of a one-component thermosetting epoxy resin adhesive, especially a thermosetting epoxy resin adhesive in motor vehicle construction.

## Revendications

1. Adhésif époxy thermodurcissable monocomposant, comprenant :
- 10 à 60 % en poids, en particulier 30 à 50 % en poids, par rapport au poids total de la composition de résine époxy, d'une résine époxy ayant en moyenne plus d'un groupe époxy par molécule ;
- 1 à 10 % en poids, en particulier 2 à 6 % en poids, par rapport au poids total de la composition de résine époxy, d'au moins un durcisseur latent pour résines époxy ;
- 2 à 7 % en poids, en particulier 2 à 6,5 % en poids, 2 à 5 % en poids, 2 à 4 % en poids de particules d'aérogel, par rapport au poids total de l'adhésif époxy thermodurcissable monocomposant ;
- au moins un améliorant de ténacité **D**, choisi dans le groupe consistant en les polymères de polyuréthane bloqués en bout **D1,** les caoutchoucs liquides **D2** et les polymères coeur-écorce **D3,** dont la proportion est alors de préférence :
améliorant de ténacité **D1** 10 à 60 % en poids, en particulier 20 à 40 % en poids ;
améliorant de ténacité **D2** 10 à 30 % en poids, en particulier 20 à 30 % en poids ;
améliorant de ténacité **D3** 10 à 30 % en poids, en particulier 20 à 30 % en poids ;
par rapport au poids total de la composition de résine époxy ;
- de préférence 5 à 40 % en poids, de préférence 5 à 20 % en poids, par rapport au poids total de la composition de résine époxy, d'une charge **F** choisie dans le groupe consistant en le carbonate de calcium et l'oxyde de calcium ;
- de préférence 0,1 à 15 % en poids, de préférence 0,1 à 5 % en poids, d'une manière particulièrement préférée 0,1 à 2 % en poids, d'une manière particulièrement préférée 0,2 à 1 % en poids, par rapport au poids total de la composition de résine époxy, d'un diluant réactif portant des groupes époxy **G,**
l'adhésif époxy thermodurcissable monocomposant étant à raison de plus de 95 % en poids, par rapport au poids total de la composition de résine époxy, constitué des constituants ci-dessus,
et la résine époxy présentant une viscosité de 1 000 à 4 000 Pa.s, en particulier de 1 000 à 3 500 Pa.s à 25 °C, la viscosité étant déterminée de manière oscillogaphique au moyen d'un rhéomètre du type MCR 301, AntonPaar doté d'une plaque pouvant être chauffée, dans les conditions de mesure d'une fente de 1 000 µm, d'un diamètre de plaque de mesures de 25 mm (plaque/plaque), d'une déformation de 0,01 à 5 Hz à une température de 25 °C.

2. Résine époxy thermodurcissable monocomposant selon la revendication 1, dans laquelle il s'agit de particules d'aérogel amorphe de dioxyde de silicium, en particulier de particules d'aérogel de dioxyde de silicium modifié en surface par des groupes triméthylsilyle.

3. Résine époxy thermodurcissable monocomposant selon la revendication 1 ou 2, dans laquelle la masse volumique des particules de l'aérogel est de 90 à 200 kg/m³, en particulier de 110 à 190 kg/m³.

4. Résine époxy thermodurcissable monocomposant selon l'une des revendications précédentes, dans laquelle les particules d'aérogel présentent une granulométrie moyenne de 0,01 à 5 mm, de préférence de 0,1 à 4 mm, d'une manière particulièrement préférée de 1 à 4 mm.

5. Adhésif époxy thermodurcissable monocomposant selon l'une des revendications précédentes, dans lequel l'au moins un améliorant de ténacité **D** est un polymère de polyuréthane bloqué en bout **D1,** en particulier un prépolymère de polyuréthane bloqué en bout de Formule (I) ; 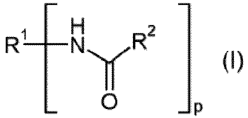
dans laquelle R¹ représente un radical p-valent d'un prépolymère de polyuréthane linéaire ou ramifié, terminé par des groupes isocyanates, après élimination des groupes isocyanate terminaux ;
p représente une valeur de 2 à 8 ; et
R² représente, indépendamment les uns des autres, un substituant qui est choisi dans le groupe consistant en 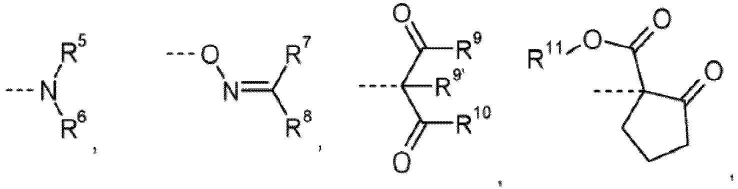 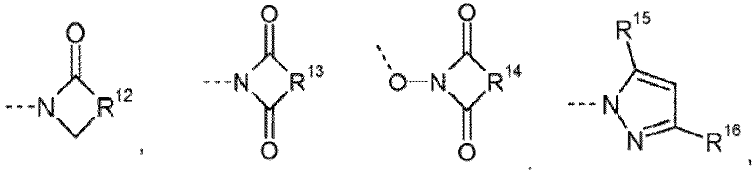 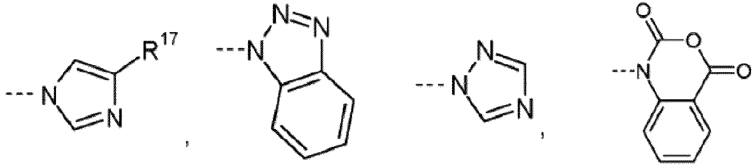 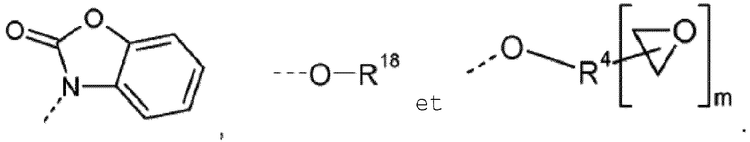 dans lequel
R⁵, R⁶, R⁷ et R⁸, chacun indépendamment des autres, représentent un groupe alkyle ou cycloalkyle ou aralkyle ou arylalkyle,
ou R⁵, ensemble avec R⁶, ou R⁷ ensemble avec R⁸, forment une partie d'un cycle à 4 à 7 chaînons, qui est éventuellement substitué ;
R⁹, R^{9'} et R¹⁰, chacun indépendamment des autres, représentent un groupe alkyle ou aralkyle ou arylalkyle, ou un groupe alkyloxy ou aryloxy ou aralkyloxy ;
R¹¹ représente un groupe alkyle,
R¹², R¹³ et R¹⁴, chacun indépendamment des autres, représentent un groupe alkylène ayant 2 à 5 atomes de carbone, qui présente éventuellement des doubles liaisons ou est substitué, ou encore un groupe phénylène ou un groupe phénylène hydrogéné ;
R¹⁵, R¹⁶ et R¹⁷, chacun indépendamment des autres, représentent H ou un groupe alkyle ou un groupe aryle ou un groupe aralkyle ; et
R¹⁸ représente un groupe aralkyle ou un groupe aromatique substitué ou non substitué, mono- ou polycyclique, qui comprend éventuellement des groupes hydroxyle aromatiques ;
R⁴ représente un radical d'un époxyde aliphatique, cycloaliphatique, aromatique ou araliphatique, contenant un groupe hydroxyle primaire ou secondaire, après élimination des groupes hydroxy et époxy ;
et m représente une valeur de 1, 2 ou 3.

6. Adhésif époxy thermodurcissable monocomposant selon l'une quelconque des revendications précédentes, l'adhésif époxy présentant une viscosité entre 1 000 Pa.s et 3 000 Pa.s à 25 °C, en particulier entre 1 100 Pa.s et 2 800 Pa.s à 25 °C.

7. Adhésif époxy thermodurcissable monocomposant selon l'une quelconque des revendications précédentes, dans lequel le durcisseur latent est choisi parmi le dicyanodiamide, les guanamines, les guanidines, les aminoguanidines et leurs dérivés, les urées substituées, les imidazoles et les complexes aminés, de préférence le dicyanodiamide.

8. Procédé de collage de substrats, en particulier de substrats métalliques, comprenant les étapes suivantes
a) application d'un adhésif époxy thermodurcissable monocomposant selon l'une quelconque des revendications 1 à 7 sur un premier substrat, en particulier un premier substrat métallique ;
b) mise en contact de l'adhésif époxy appliqué avec un deuxième substrat, en particulier un deuxième substrat métallique, avec formation d'un joint collé ; et
c) durcissement de l'adhésif époxy dans le joint collé à une température dans la plage de 100 à 220 °C.

9. Procédé selon la revendication 8, dans lequel entre l'étape b) et l'étape c) est mise en oeuvre une étape b'), l'étape b') comprenant : la mise en contact des substrats et de l'adhésif époxy thermodurcissable monocomposant en contact avec eux avec un liquide de lavage à une température entre 20 et 100 °C, en particulier entre 40 et 70 °C ; de préférence entre 50 et 70 °C.

10. Article, comprenant un joint collé durci, le joint collé pouvant être obtenu par un procédé selon l'une quelconque des revendications 8 ou 9.

11. Utilisation d'un adhésif époxy thermodurcissable monocomposant selon l'une quelconque des revendications 1 à 7 pour un collage thermorésistant des substrats.

12. Utilisation de particules d'aérogel telles que décrites dans l'adhésif époxy thermodurcissable monocomposant selon l'une des revendications 1 à 7, pour augmenter la résistance au délavage d'un adhésif époxy thermodurcissable monocomposant, en particulier d'un adhésif époxy thermodurcissable dans la construction automobile.

13. Utilisation de particules d'aérogel telles que décrites dans l'adhésif époxy thermodurcissable monocomposant selon l'une quelconque des revendications 1 à 7, pour augmenter la résistance au clivage sous charge dynamique/Impact peel (I-Peel) (selon ISO 11343), en particulier entre 23 °C et -30 °C, d'un adhésif époxy thermodurcissable monocomposant, en particulier d'un adhésif époxy thermodurcissable dans la construction automobile.
